# EUROPÄISCHE PATENTANMELDUNG

(11) **EP 4 068 411 A2**
(43) Veröffentlichungstag der Anmeldung: **05.10.2022**
(21) Anmeldenummer: 22158209.1
(22) Anmeldetag: 23.02.2022
(51) Int. Cl.: H01M 4/00

(54) **VERFAHREN ZUR HERSTELLUNG EINER BATTERIEELEKTRODE**

(30) Priorität: 03.03.2021 DE 102021202067
(71) Anmelder: VOLKSWAGEN AG, 38440 Wolfsburg (DE)
(72) Erfinder: JAMADAR, Kartik, 38442 Wolfsburg (DE); MAHLKE, Sebastian, 38259 Salzgitter (DE); SCHOPF, Sven, 38116 Braunschweig (DE); THEUERKAUF, Christian, 38114 Braunschweig (DE); TITSCHER, Paul, 38112 Braunschweig (DE)
(74) Vertreter: FDST Patentanwälte

(57) **Zusammenfassung**

Die Erfindung betrifft ein Verfahren (32) zur Herstellung einer Elektrode (16) einer Batterie (14), bei welchem, eine Metallfolie (24) zugeführt wird, die mit einer ein Aktivmaterial aufweisenden Schicht (28) versehen ist, wobei ein Rand (30) der Metallfolie (24) frei von der Schicht (28) ist. Auf den Rand (30) wird ein Trägerband (50) aufgebracht, und die Metallfolie (24) mit der Schicht (28) und dem Trägerband (50) wird kalandriert. Das Trägerband (50) wird von der Metallfolie (24) abgelöst. Ferner betrifft die Erfindung eine Fertigungsvorrichtung (34).

## Beschreibung

Die Erfindung betrifft ein Verfahren zur Herstellung einer Elektrode einer Batterie. Ferner betrifft die Erfindung eine Fertigungsvorrichtung, die gemäß dem Verfahren betrieben ist.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batterien, auch als Batteriezellen bezeichnet, aufweist. Diese sind miteinander elektrisch in Reihe und/oder parallel geschaltet, sodass die an der Hochvoltbatterie anliegende elektrische Spannung einem Vielfachen der mittels jeder der Batterien bereitgestellten elektrischen Spannung entspricht.

Jede Batterie weist eine Anode, eine Kathode und einen dazwischen angeordneten Separator sowie einen Elektrolyten mit freibeweglichen Ladungsträgern auf. Als ein derartiger Elektrolyt wird beispielsweise eine Flüssigkeit herangezogen. In einer Alternative ist die Batterie als Festkörperbatterie ausgestaltet, und der Elektrolyt liegt als Festkörper vor. Die Anode und die Kathode, die die Elektroden der Batterie bilden, umfassen üblicherweise einen Träger, der als Stromableiter fungiert. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Li-Ionen, geeignet. Je nach Verwendung als Anode oder Kathode wird ein anderes Material für den Träger und eine unterschiedliche Art des Materials der Schicht verwendet. Zur erleichterten Herstellung der Anode und der Kathode wird die Schicht jeweils in einem zumindest teilweisen verflüssigten Zustand auf den Träger aufgetragen und dort mittels eines Rakels verteilt. Nachfolgend erfolgt ein Kalandrieren, sodass eine genau definierte Dicke der Schicht und somit der Elektrode realisiert wird.

Damit ein elektrischer Kontakt mit der Elektrode möglich ist, ist der Träger zumindest in einem Abschnitt nicht mit der Schicht versehen, und an diesem Abschnitt erfolgt eine elektrische Kontaktierung. Hierfür wird beispielsweise die Schicht partiell entfernt, was sie jedoch einen zusätzlichen Herstellungsschritt erfordert. Auch ist hierbei sicherzustellen, dass der Träger nicht beschädigt wird. Daher wird üblicherweise der Träger nicht vollflächig mit der Schicht versehen, und der Bereich, der zur elektrischen Kontaktierung vorgesehen ist, wird frei von der Schicht belassen.

Infolgedessen wird das Kalandrieren mit lediglich einem teilweise beschichteten Träger durchgeführt. Dabei wird mittels des Kalanders lediglich über die Schicht eine Kraft auf den Träger ausgeübt, der infolgedessen dort zumindest teilweise plastisch verformt wird. Dahingegen wird der Teil des Trägers, der frei von der Schicht ist, nicht verformt. Somit entstehen zwischen diesen Teil mechanische Spannungen, die zu Falten führen, weswegen die erstellte Elektrode nicht vollständig plan ist. Deswegen ist es möglich, dass die erstellte Elektrode nicht vollflächig an dem Separator anliegt und somit kein durchgehender elektrische Kontakt zwischen diesen vorhanden ist, sodass eine Leistungsfähigkeit der Batterie reduziert ist. Zur Vermeidung hiervon wird üblicherweise eine maximale Größe des Trägers beim Erstellen der Elektrode ermittelt, bei der trotz der entstehenden Falten die Leistungsfähigkeit im Wesentlichen unverändert ist. Daher ist kein kontinuierliches Fertigen eines Bandes aus dem Träger und der Schicht möglich ist, aus dem die Elektrode nachfolgend abgeschnitten werden.

Damit dennoch der Träger als Rollenware verwendet werden kann, was zu einer erhöhten Herstellungsgeschwindigkeit führen kann, wird die Schicht unterbrochen auf diesen aufgetragen, sodass mehrere einzelne, zueinander beabstandete und mit der Schicht versehene Bereiche gebildet sind. Somit sind die maximal entstehenden mechanische Spannungen begrenzt. Als weitere Alternative wird beispielsweise der Träger an bestimmten Stellen aufgetrennt, sodass dort eine Entlastung erfolgt. Dies alles verringert jedoch die Herstellungsgeschwindigkeit.

Der Erfindung liegt die Aufgabe zugrunde, ein besonders geeignetes Verfahren zur Herstellung einer Elektrode einer Batterie und eine besonders geeignete Fertigungsvorrichtung, wobei vorteilhafterweise eine Herstellungsgeschwindigkeit vergrößert und/oder ein Ausschuss reduziert sind.

Hinsichtlich des Verfahrens wird diese Aufgabe durch die Merkmale des Anspruchs 1 und hinsichtlich der Fertigungsvorrichtung durch die Merkmale des Anspruchs 11 erfindungsgemäß gelöst. Vorteilhafte Weiterbildungen und Ausgestaltungen sind Gegenstand der jeweiligen Unteransprüche.

Das Verfahren dient der Herstellung einer Elektrode einer Batterie. Die Batterie ist insbesondere ein galvanisches Element, das vorzugsweise zwei Elektroden aufweist, nämlich eine Anode und eine Kathode. Zwischen diesen ist im Montagezustand zweckmäßigerweise ein Separator angeordnet. Das Verfahren wird beispielsweise zur Herstellung lediglich der Anode oder beispielsweise lediglich zur Herstellung der Kathode verwendet. Zum Beispiel ist lediglich eine der Elektroden der Batterie gemäß dem Verfahren erstellt, oder zweckmäßigerweise beide. Die Batterie weist vorzugsweise einen Elektrolyten auf, der eine Anzahl an freibeweglichen Ladungsträger, zweckmäßigerweise Ionen, bereitstellt. Beispielsweise ist der Elektrolyt ein Bestandteil der Anode und/oder Kathode oder ist zumindest geeignet, sich dort anzulagern und somit von diesen aufgenommen zu werden. Die Batterie ist beispielsweise eine Festkörperbatterie, sodass der Elektrolyt als Festkörper vorliegt. Besonders bevorzugt jedoch ist der Elektrolyt flüssig. Zum Beispiel ist die Batterie eine Sekundärbatterie.

Vorzugsweise ist die Batterie im bestimmungsgemäßen Zustand ein Bestandteil eines Kraftfahrzeugs. Hierfür ist die Batterie geeignet, insbesondere vorgesehen und eingerichtet. Im bestimmungsgemäßen Zustand ist die Batterie beispielsweise ein Bestandteil eines Energiespeichers des Kraftfahrzeugs, der mehrere derartige Batterien/Batteriezellen aufweist. Die Batterien sind insbesondere in einem Gehäuse des Energiespeichers angeordnet und miteinander elektrisch parallel und/oder in Reihe geschaltet. Somit ist die an dem Energiespeicher anliegende elektrische Spannung ein Vielfaches der mittels jeder der Batterien bereitgestellten elektrischen Spannung. Zweckmäßigerweise sind sämtliche Batterien dabei zueinander baugleich, was eine Fertigung vereinfacht. Das Gehäuse ist bevorzugt aus einem Metall gefertigt, beispielsweise einem Stahl, wie einem Edelstahl, oder einem Aluminium und/oder in einem Druckgussverfahren. Insbesondere ist das Gehäuse verschlossen ausgestaltet. Zweckmäßigerweise ist in das Gehäuse eine Schnittstelle eingebracht, die einen Anschluss des Energiespeichers bildet. Die Schnittstelle ist dabei elektrisch mit der Batterie kontaktiert, sodass ein Einspeisen von elektrischer Energie und/oder eine Entnahme von elektrischer Energie aus der Batterie von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen des Energiespeichers und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer Alternative ist die Batterie ein Bestandteil eines Flurförderfahrzeug, einer Industrieanlage, eines handgeführten Geräts, wie beispielsweise eines Werkzeugs, insbesondere eines Ackuschraubers. In einer weiteren Alternative ist die Batterie ein Bestandteil einer Energieversorgung und wird dort beispielsweise als sogenannte Pufferbatterie verwendet. In einer weiteren Alternative ist die Batterie ein Bestandteil eines tragbaren Geräts, beispielsweise eines tragbaren Mobiltelefons, oder eines sonstigen Wearables. Auch ist es möglich, eine derartige Batterie im Campingbereich, Modellbaubereich oder für sonstige Outdoor-Aktivitäten zu verwenden.

Das Verfahren sieht vor, dass in einem ersten Arbeitsschritt eine Metallfolie zugeführt, also insbesondere bereitgestellt, wird, die mit einer Schicht versehen ist. Die Metallfolie bildet hierbei nach Abschluss des Verfahrens insbesondere ein Ableiter, auch als Träger bezeichnet, der jeweiligen Elektrode. Beispielsweise wird als Metallfolie eine Kupferfolie verwendet, wenn als Elektrode die Anode erstellt wird. Falls hingegen als Elektrode die Kathode herangezogen wird, wird als Metallfolie zweckmäßigerweise eine Aluminiumfolie verwendet. Die Metallfolie ist im Wesentlichen zweidimensional und weist insbesondere in der dritten Dimension eine vergleichsweise geringe Dicke auf. Insbesondere ist hierbei Dicke zwischen 5 µm und 12 µm. Beispielsweise ist lediglich eine der Seiten der Metallfolie mit der Schicht versehen oder besonders bevorzugt beide Seiten. Hierbei ist jedoch eine Rand der Metallfolie frei von der Schicht. Der Rand umfasst dabei eine Kante der Metallfolie und reicht hierbei insbesondere von einer Kante der Metallfolie in Richtung deren mittleren Bereichen. Der Rand ist vorzugsweise durchgängig und die Fläche des Rands ist geeigneterweise geringer als 20 %, 10 % oder 5 % der vollständigen Fläche der Metallfolie. Insbesondere erstreckt sich der Rand senkrecht zur Kante maximal 10 % der vollständigen Ausdehnung der Metallfolie senkrecht zu dieser Kante. Sofern die Metallfolie auf beiden Seiten mit der Schicht versehen ist, ist insbesondere der Rand auf beiden Seiten frei von der Schicht. Vorzugsweise sind hierbei die zueinander freien Bereiche deckungsgleich zueinander.

Die Dicke der Schicht, also deren Ausdehnung senkrecht zur Hauptausdehnungsrichtung der Metallfolie, ist insbesondere zwischen 40 µm und 100 µm und beispielsweise zwischen 50 µm und 80 µm. Die Schicht weist ein Aktivmaterial auf. Als Aktivmaterial wird beispielsweise ein Lithium-Metall-Oxid, wie Lithium-Cobalt(III)-Oxid (LiCo02), NMC, NCA oder LFP verwendet. Alternativ wird als Aktivmaterial NMC622 oder NMC811 herangezogen. Die Wahl des Aktivmaterials ist hierbei insbesondere abhängig davon, ob die Elektrode die Kathode oder Anode bildet. Die Schicht umfasst beispielsweise zusätzlich zu dem Aktivmaterial einen Binder, ein Lösungsmittel und/oder ein Leitadditiv, wie Leitruß.

In einem weiteren Arbeitsschritt wird auf den Rand ein Trägerband aufgebracht. Mit anderen Worten wird das Trägerband auf die Metallfolie aufgebracht, insbesondere auf die Seite der Metallfolie, auf der sich auch die Schicht befindet. Sofern die Metallfolie beidseitig beschichtet ist, wird vorzugsweise auf beiden Seiten der Metallfolie, also beide Ränder, jeweils ein Trägerband aufgebracht. Beispielsweise wird das Trägerband lediglich auf die Metallfolie aufgelegt oder dort befestigt, beispielsweise mittels Klebstoffs. Besonders bevorzugt jedoch wird das Trägerband mit der Metallfolie zumindest teilweise verpresst und/oder stoffschlüssige verbunden, sodass keine zusätzlichen Bauteile erforderlich sind. Auch ist es möglich, das Aufbringen in einer vergleichsweise kurzen Zeitspanne durchzuführen. Zudem ist es möglich, das Trägerband mittels einer entsprechenden Walze auf der Metallfolie aufzubringen. Beispielsweise wird das Trägerband vor dem Aufbringen auf den Rand teilweise erwärmt, sodass ein Anhaften an dem Rand verbessert ist.

In einem nachfolgenden Arbeitsschritt wird die Metallfolie mit der Schicht und dem Trägerband kalandriert. Mit anderen Worten wird Metallfolie, auf der sich die Schicht und das Trägerband befinden, durch den Kalander bewegt. Aufgrund des Kalanders erfolgt insbesondere eine Verdichtung der Schicht, sodass deren Dichtigkeit zunimmt und/oder deren Porosität abnimmt. Infolgedessen wird die Dicke der Schicht, also deren Ausdehnung senkrecht zur Metallfolie, verringert. Hierfür wird auf die Schicht eine Kraft in Richtung der Metallfolie ausgeübt, insbesondere mittels etwaiger Walzen des Kalanders. Da zudem auf den Rand der Metallfolie das Trägerband aufgelegt ist, erfolgt mittels des Kalanders auch in diesem Bereich der Metallfolie eine Krafteinwirkung, sodass diese mittels des Kalanders im Wesentlichen gleichmäßig belastet wird. Mit anderen Worten wird aufgrund der Kraftausübung auf die Metallfolie diese sowohl im Bereich der Schicht als auch im Bereich des Trägerbands zumindest teilweise verformt, beispielsweise senkrecht zur Bewegungsrichtung der Metallfolie durch den Kalander, also insbesondere parallel zu einer Rotationsachse etwaiger Walzen des Kalanders, und/oder parallel zur Bewegungsrichtung durch den Kalander. Somit entstehen in der Metallfolie im Wesentlichen keine mechanische Spannungen zwischen dem Bereich, der mit der Schicht versehen ist, und dem Bereich, der mit dem Trägerband aufgebracht ist.

In einem nachfolgenden Arbeitsschritt wird das Trägerband von der Metallfolie abgelöst. Beispielsweise wird hierfür das Trägerband zerstört oder besonders bevorzugt zerstörungsfrei abgelöst. Insbesondere wird hierbei ein Kraftschluss zwischen der Metallfolie und dem Trägerband gelöst sowie ein etwaiger Stoffschluss. Somit ist es möglich, das Trägerband erneut zu verwenden. Vorzugsweise ist das Trägerband hierbei geschlossen ausgestaltet und wird beispielsweise nach dem Ablösen erneut auf einen Bereich der Metallfolie, also den Rand der Metallfolie, aufgebracht, der bislang noch nicht kalandriert wurde. Beispielsweise wird die mit der Schicht versehene Metallfolie nachfolgend als Elektrode verwendet, wobei die Metallfolie als Stromableiter fungiert, auch als Ableiter oder Träger bezeichnet. Alternativ hierzu erfolgt noch eine zusätzliche Bearbeitung bis die Elektrode erstellt ist.

Aufgrund des Verfahrens erfolgt bei dem Kalandrieren eine gleichmäßige Kraftausübung auf die Metallfolie, sodass in dieser im Wesentlichen keine mechanische Spannungen vorhanden sind. Infolgedessen sind auch in der auf diese Weise erstellten Elektrode keine Falten vorhanden, sodass die Elektrode im Wesentlichen vollständig plan ist. Somit ist auch ein Weiterverarbeiten zu der Batterie und ein Nachbearbeiten ermöglicht, wobei ein zudem Ausschuss reduziert ist. Nach Ablösen des Trägerbands von dem Rand ist dort eine elektrische Kontaktierung der Metallfolie im Wesentlichen ungehindert möglich, weswegen zudem eine Weiterverarbeitung der Elektrode vereinfacht ist.

Vorzugsweise wird zur Durchführung des Verfahrens eine Fertigungsvorrichtung verwendet, die eine Zuführvorrichtung für die teilweise mit der Schicht versehene Metallfolie, eine Aufbringvorrichtung für das Trägerband, den Kalander und eine Ablösevorrichtung für das Trägerband aufweist, und die insbesondere entsprechend des Verfahrens betrieben ist. Geeigneterweise ist hierbei die Metallfolie, die mit der Schicht versehen ist, als Rollenware vorhanden, wobei der Rand eine Längskante der auf diese Weise bereitgestellten Metallfolie bildet. Somit ist es möglich, eine Schicht bereitzustellen, die im Wesentlichen die gleiche Länge wie die Metallfolie aufweist, sodass nach Abschluss des Verfahrens von dem auf diese Weise erstellte Band, das insbesondere erneut auf eine Rolle aufgewickelt wird, mehrere Elektroden abgelängt werden können. Somit ist eine Herstellungsgeschwindigkeit der Elektroden vergrößert, und eine maximale Größe der Elektroden ist nicht vorgegeben. Insbesondere wird das aus der Metallfolie und der Schicht gebildete Band zwischen dem Kalander gespannt, wofür insbesondere eine Spannvorrichtung verwendet wird. Somit ist das Band im Bereich des Kalanders bereits teilweise gespannt, weswegen eine Ausbildung von Falten weiter vermieden ist.

Beispielsweise bildet lediglich eine der Längskante der Metallfolie teilweise den Rand. Besonders bevorzugt jedoch bilden die beiden Längskanten jeweils einen Rand, di jeweils 2 frei von der Schicht sind. Bei dem Verfahren wird auf jeden der Ränder jeweils ein entsprechendes Trägerband aufgebracht. Auf diese Weise ist es möglich, die Elektrode auf gegenüberliegenden Seiten elektrisch zu kontaktieren, und auch eine Weiterverarbeitung ist erleichtert. Mit anderen Worten ist es insbesondere möglich, die Metallfolie bzw. das Band und/oder die Elektroden an zwei unterschiedlichen Seiten anzugreifen um dieses zu bewegen, ohne dass eine Beschädigung der Schicht folgt. Vorzugsweise umfasst die Fertigungsvorrichtung zusätzlich eine Verseheinheit, mittels derer die Metallfolie mit der Schicht versehen wird, insbesondere sofern auf der etwaigen Rolle lediglich die Metallfolie aufgerollt ist. Somit wird insbesondere vor dem Kalandrieren zunächst die Schicht aufgebracht, beispielsweise mittels Gießens und/oder eines Rakels oder mittels Druckens.

Beispielsweise wird das Trägerband bündig mit der Schicht angeordnet. Somit wird die Schicht zumindest teilweise mittels des Trägerbands stabilisiert. Besonders bevorzugt jedoch wird das Trägerband in einem Abstand zu der Schicht auf den Rand aufgebracht. Beispielsweise ist hierbei zwischen dem Trägerband und der Schicht ein weiteres Bauteil angeordnet. Besonders bevorzugt jedoch ist dieser Bereich frei von weiteren Bauteilen. Aufgrund des Abstands ist eine seitliche Ausdehnung der Schicht in Richtung des Trägerbands bei dem Kalandrieren ermöglicht, wenn auf die Schicht eine Kraft in Richtung der Metallfolie ausgeübt wird. Infolgedessen ist ein Ausbilden von Wellen/Falten oder ein Umgreifen der des Trägerbands durch die Schicht verhindert, sodass einerseits die Oberfläche der Schicht vergleichsweise plan und andererseits ein leichtes Ablösen des Trägerbands ermöglicht ist. Zusammenfassend wird mittels des Abstands eine seitliche Ausdehnung der Schicht in Richtung des Randes aufgrund des Kalandrierens kompensiert.

Beispielsweise ist der Abstand derart gewählt, dass auch nach dem Kalandrieren zwischen der Schicht und dem Trägerband weiterhin ein freier Bereiche gebildet ist, auch wenn der Abstand nunmehr verringert ist. Somit wird auch beim Ablösen des Trägerbands eine Beschädigung der Schicht vermieden. Beispielsweise ist der Abstand zwischen 1 mm und 5 mm und zweckmäßigerweise zwischen 2 mm und 3 mm. Auf diese Weise ist ein ausreichender Ausdehnungsraum für die Schicht gegeben, wobei der Bereich der Metallfolie, der nicht mit der beim Kalandrieren aufgebrachten Kraft beaufschlagt wird, vergleichsweise klein ist.

Beispielsweise ist das Trägerband mit der Kante des Rands bündig. Besonders bevorzugt jedoch wird das Trägerband derart auf den Rand aufgebracht, dass dieses seitlich über die Metallfolie übersteht, also über die Kante. Hierfür wird eine Breite des Trägerbands zweckmäßigerweise entsprechend gewählt. Aufgrund des Überstands entstehen somit im Bereich der Kante keine mechanischen Spannungen beim Kalandrieren, und die insgesamt auf die Metallfolie wirkenden Kräfte sind im Wesentlichen gleichmäßig.

Beispielsweise wird die Dicke des Trägerbands kleiner oder gleich der Dicke der Schicht gewählt. Somit erfolgt zunächst ein Kontakt der Schicht mit den Walzen des Kalanders, bevor diese in Kontakt mit dem Trägerbands gelangt. Beispielsweise ist die Dicke der Trägerbands, also die Ausdehnung senkrecht zu der Ausdehnungsebene der Metallfolie, im Wesentlichen gleich der Höhe, die die Metallfolie und die Schicht nach dem Kalandrieren aufweisen sollen. Besonders bevorzugt jedoch ist die Dicke des Trägerbands größer als die Dicke der Schicht gewählt, also deren Ausdehnung jeweils senkrecht zur Ausdehnungsebene der Metallfolie. Infolgedessen wird zunächst im Bereich des Rands beim Kalandrieren über das Trägerband die Kraft auf die Metallfolie ausgeübt, sodass zunächst der Rand verformt wird. Erst nachfolgend erfolgt über die Schicht eine Ausübung der Kraft auf die Metallfolie. Somit wird zunächst die Metallfolie randseitig nach außen ausgeweitet, bevor der weitere Bereich der Metallfolie, der mit der Schicht versehen ist, verformt wird. Somit wird die Metallfolie im Wesentlichen faltenfrei verformt.

Alternativ oder in Kombination hierzu weist der Kalander, also insbesondere etwaige Walzen des Kalanders, eine Stufe auf, sodass zunächst die Walzen des Kalanders mit der Schicht mechanisch in Kontakt geraten, bevor ein mechanischer Kontakt mit der Schicht erfolgt. Auf diese Weise ist sichergestellt, dass zunächst die Krafteinwirkung auf den Rand der Metallfolie erfolgt. Hierbei ist der Kalanders derart ausgestaltet, dass trotz der Stufe eine Oberflächengeschwindigkeit der Walze zweckmäßigerweise stets gleich ist, und die Walze des Kalanders ist insbesondere zwei- oder mehr geteilt. Infolgedessen ist ein Faltenwurf in der Metallfolie aufgrund unterschiedlicher Oberflächengeschwindigkeiten der Walze vermieden.

Beispielsweise wird beim Kalandrieren das Trägerband plastisch verformt. Besonders bevorzugt jedoch ist das Material des Trägerbands derart gewählt, dass dieses aufgrund des Kalandrierens lediglich elastisch verformt wird. Auf diese Weise ist ein Wiederverwenden des Trägerbands ermöglicht, sodass bei Durchführung des Verfahrens stets das gleiche Trägerband verwendet werden kann, was Herstellungskosten reduziert. Besonders bevorzugt ist hierbei das Trägerband aus einem Gummi erstellt, beispielsweise aus Styropor-Butadien-Kautschuk ("SBR", "styrene-butadiene rubber"). Somit ist es möglich, die Dicke des Trägerbands auf die Hälfte oder bis zu einem Viertel mittels des Kalandrierens zusammenzustauchen, wobei dennoch lediglich eine elastische Verformung folgt. Auch ist aufgrund des verwendeten Materials ein Führen des Trägerbands zum Aufbringen auf die Metallfolie erleichtert. Alternativ hierzu ist das Trägerband beispielsweise aus Polytetrafluorethylen ("PTFE") oder Acryl erstellt. Auf diese Weise ist ein Ablösen von der Metallfolie erleichtert, wobei das Trägerband dennoch eine vergleichsweise hohe Elastizität aufweist.

Alternativ hierzu weist das Trägerband ein Metallband auf, das mit einem Kunststoff beschichtet ist. Somit ist eine Robustheit des Trägerbands erhöht. Insbesondere wird als Metall Edelstahl oder Titan herangezogen, was eine Robustheit weiter erhöht. Aufgrund des Kunststoffs wird eine Beschädigung weiterer Bestandteile durch das Metallband verhindert. Insbesondere ist das Metallband auf der Seite, auf der die Anlage an der Metallfolie erfolgt, mit dem Kunststoff beschichtet. Besonders bevorzugt ist das Metallband auf beiden Seiten mit dem Kunststoff beschichtet, sodass auch der Kalander lediglich in mechanischem Kontakt mit dem Kunststoff tritt, weswegen auch eine Beschädigung hiervon vermieden ist. Insbesondere wird als Kunststoff ein Gummi oder besonders bevorzugt Polyurethan (PUR) herangezogen. Somit ist dennoch ein vergleichsweise umfangreiches elastisches Verformen des auf diese Weise erstellten Trägerbands möglich.

Beispielsweise ist das Trägerband auf der der Metallfolie zugewandten Seite glatt. Somit ist eine Herstellung des Trägerbands vereinfacht, und eine Abnutzung des Trägerbands, also ein Verschleiß, verringert. Besonders bevorzugt jedoch weist das Trägerband auf der der Metallfolie zugewandten Seite Strukturen auf, die schräg verlaufenden, also insbesondere schräg zum Verlauf des Trägerbands und/oder der Metallfolie. Insbesondere verlaufen hierbei die Strukturen schräg zu der Richtung, entlang derer die Metallfolie durch den Kalander bewegt wird. Zweckmäßigerweise sind die Strukturen jeweils mittels einer Kante und/oder einer Sicke gebildet, wobei die Strukturen vorzugsweise zueinander beabstandet sind. Aufgrund der Strukturen ist ein Anhaften des Trägerbands an der Metallfolie verbessert, und es erfolgt teilweise ein Festkrallen des Trägerbands mit der Metallfolie, sodass bei dem Ausüben der Kraft auf das Trägerband mittels des Kalanders die Metallfolie vermehrt verformt wird. Insbesondere erfolgt aufgrund der schräg verlaufenden Strukturen ein Bewegen des Randes von der Schicht weg, sodass die Metallfolie vom Rand her von der Schicht weggezogen wird. Somit wird aufgrund der Strukturen die Metallfolie beim Ausüben der Kraft mittels des Kalanders gespannt, und ein Faltenwurf wird verstärkt verhindert. Insbesondere sind die Strukturen derart ausgebildet, dass bei einer Kraftausübung auf den Träger der Rand von der Schicht wegbewegt wird.

Vorzugsweise wird gemäß dem Verfahren der Rand in der Ausdehnungsebene der Metallfolie von der Schicht weggezogen. Somit wird die Metallfolie zwischen der Kante des Rands und dem Bereich, der mit der Schicht versehen ist, gedehnt. Insbesondere erfolgt das Wegziehen senkrecht zu der Bewegungsrichtung der Metallfolie durch den Kalander. Beispielsweise werden für das Wegzeihen die etwaigen Strukturen des Trägerbands verwendet. Besonders bevorzugt jedoch wird eine zusätzliches Vorrichtung der etwaigen Fertigungsvorrichtung verwendet, insbesondere eine Ziehvorrichtung. Geeigneterweise erfolgt das Wegziehen im Anschluss an das Kalandrieren, sodass etwaige dennoch vorhandene Falten aufgrund des Wegziehens entfernt werden. Geeigneterweise erfolgt das Wegziehen erst im Anschluss an das Entfernen des Trägerbands von der Metallfolie, und mittels der etwaigen Ziehvorrichtung wird vorzugsweise der Rand angegriffen. Da die Trägerfolie entfernt ist, ist somit ein im Wesentlichen direktes Wegziehen des Randes ermöglicht, und eine Belastung des Trägerbands ist verringert.

Zum Wegziehen wird beispielsweise eine Walze der Ziehvorrichtung verwendet, die am Rand angreift. Insbesondere umfasst hierbei die Ziehvorrichtung zusätzlich ein weitere Walze, die an der Schicht anliegt, sodass mittels der weiteren Walzen die Schicht stabilisiert wird. Beispielsweise weist die an dem Rand angreifende Walze eine Struktur zum Ziehen auf, oder die Walze wird in Ziehrichtung teilweise bewegt. Insbesondere ist die Walze zumindest teilweise mit einem Kunststoff überzogen oder aus diesem gefertigt, beispielsweise einem Polyurethane. Auf diese Weise ist eine Beschädigung der Metallfolie vermieden. Alternativ oder in Kombination hierzu weist die an dem Rand angreifenden Walzen eine Helixform auf und ist insbesondere wendelartig ausgestaltet. Auf diese Weise ist ein kontinuierliches Wegziehen des Rands von der Schicht ermöglicht, wenn das aus der Metallfolie und der Schicht erstellte Band durch die Ziehvorrichtung bewegt wird. Insbesondere weist die Helix oder die sonstigen Strukturen der weiteren Walze eine Tiefe zwischen 0,5 mm und 1 mm auf, sodass eine Beschädigung der Metallfolie aufgrund der strukturierten Oberfläche der Ziehvorrichtung vermieden ist.

Beispielsweise ist die Metallfolie mit Ausnahme des Randes vollständig mit der Schicht versehen. Alternativ hierzu ist ein Mittelbereich der Metallfolie ebenfalls frei von der Schicht. Der Mittelbereich ist zweckmäßigerweise von zumindest den Längskanten der Metallfolie, die sich parallel zu der Bewegungsrichtung der Metallfolie durch den Kalander erstrecken, beabstandet, und zwischen dem Mittelbereich und diesen Kanten befindet sich zweckmäßigerweise die Schicht. Gemäß dem Verfahren wird ein weiteres Trägerband auf den Mittelbereich aufgebracht, das nach dem Kalandrieren ebenfalls abgelöst wird. Insbesondere ist hierbei das weitere Trägerbands baugleich zu dem Trägerband. Somit können Gleichteile verwendet werden, was Herstellungskosten der etwaigen Fertigungsvorrichtung verringert. Aufgrund des von der Schicht freien Mittelbereichs ist es möglich, mittels des Bandes aus der Metallfolie und der Schicht mehrere Elektroden zu erstellen, und/oder diese entsprechend aufzuwickeln. Somit ist eine Herstellungsgeschwindigkeit der Elektroden weiter erhöht. Beispielsweise sind mehrere derartige Mittelbereiche vorhanden, wobei bei der Herstellung auf jeden der Mittelbereich ein entsprechendes weiteres Trägerband aufgebracht wird.

Beispielsweise wird die mit der Schicht versehene Metallfolie vor dem Aufbringen des Trägerbands erwärmt. Zum Beispiel erfolgt das Erwärmen der Metallfolie bereits beim Zuführen oder nach dem Aufbringen des Trägerbands auf den Rand. Besonders bevorzugt jedoch erfolgt das Erwärmen, bevor das Trägerband auf den Rand aufgebracht wird. Somit ist ein Anhaften des Trägerbands an dem Rand verbessert. Aufgrund des Erwärmens wird die Metallfolie zumindest teilweise plastisch verformt, insbesondere aufgrund der zusätzlich vorhandenen etwaigen Spannvorrichtung. Infolgedessen ist ein Ausbilden von Falten weiter verringert. Geeigneterweise erfolgt hierbei ein Erwärmen auf einer Temperatur zwischen 80 °C und 120 °C. Auf diese Weise ist eine Beschädigung der Schicht und/oder der Metallfolie aufgrund der Hitze vermieden. Zum Erwärmen wird insbesondere die Metallfolie/die Schicht mit Infrarotlicht bestrahlt oder mittels Induktion erhitzt. Alternativ hierzu wird die mit der Schicht versehene Metallfolie mit heißer Luft beaufschlagt, oder entlang einer erhitzten Walze geführt, wofür beispielsweise eine erwärmte Flüssigkeit durch die Walze geführt wird, insbesondere Wasser oder Öl. Nach dem Kalandrieren, insbesondere nach dem Ablösen des Trägerbands sowie dem etwaigen Wegziehen des Rands von der Schicht wird vorzugsweise das Band erneut abgekühlt, sodass die sich ergebende Verformung erhalten bleibt. Somit ist eine Robustheit erhöht. Alternativ hierzu erfolgt kein Erwärmen der Metallfolie und/oder der Schicht, sodass ein Betrieb der etwaigen Fertigungsvorrichtung erleichtert ist.

Die Fertigungsvorrichtung dient der Herstellung einer Elektrode einer Batterie und weist eine Zuführvorrichtung für eine mit einer Schicht versehene Metallfolie auf. Hierbei ist eine Rand der Metallfolie frei von der Schicht, wobei der Rand sich insbesondere entlang einer Kante der Metallfolie erstreckt und diese umfasst. Die Kante ist geeigneterweise eine Längskante, die parallel zu einer Bewegungsrichtung der Metallfolie durch die Fertigungsvorrichtung ist. Beispielsweise umfasst die Zuführvorrichtung eine Rolle, auf der die mit der Schicht versehene Metallfolie aufgerollt ist.

Zudem umfasst die Fertigungsvorrichtung eine Aufbringvorrichtung für ein Trägerband. Insbesondere weist die Aufbringvorrichtung eine Walze auf, mittels derer das Trägerbands geführt und/oder auf die Metallfolie aufgebracht werden kann. Zudem umfasst die Fertigungsvorrichtung einen Kalander sowie eine Ablösevorrichtung für das Trägerband. Insbesondere ist in Bewegungsrichtung der Metallfolie durch die Fertigungsvorrichtung die Zuführvorrichtung vor der Aufbringvorrichtung und diese vor dem Kalander und diese vor der Ablösevorrichtung angeordnet, sodass bei Betrieb die Metallfolie zunächst von der Zuführvorrichtung zur Aufbringvorrichtung und nachfolgend durch den Kalander zur Ablösevorrichtung transportiert wird. Insbesondere weist die Fertigungsvorrichtung zusätzlich eine Abtransportvorrichtung auf, mittels derer beispielsweise das Band aus der Metallfolie und der Schicht aufgewickelt wird.

Zudem ist die Fertigungsvorrichtung gemäß einem Verfahren betrieben, bei dem die Metallfolie zugeführt wird, die mit der ein Aktivmaterial aufweisenden Schicht versehen ist, wobei der Rand der Metallfolie frei von der Schicht ist. Hierfür wird die Zuführvorrichtung insbesondere verwendet. Nachfolgend wird das Trägerband auf den Rand der Metallfolie aufgebracht, für die Aufbringvorrichtung verwendet wird. Nachfolgend erfolgt ein Kalandrieren der mit der Schicht und dem Trägerband versehenen Metallfolie mittels des Kalanders, und nachfolgend wird mittels der Ablösevorrichtung das Trägerband von der Metallfolie abgelöst. Geeigneterweise wird die Fertigungsvorrichtung verwendet, um das Verfahren durchzuführen. Insbesondere ist die Fertigungsvorrichtung kontinuierlich betrieben, und die Zuführvorrichtung weist insbesondere eine Rolle auf, auf der zumindest die Metallfolie aufgewickelt ist.

Die Fertigungsvorrichtung weist geeigneterweise eine Steuereinheit auf, die vorgesehen und/oder eingerichtet ist, das Verfahren durchzuführen. Vorzugsweise umfasst die Fertigungsvorrichtung zusätzlich einen Messvorrichtung, mittels derer eine Dicke des Bandes aus der Metallfolie und der Schicht gemessen wird, wobei die Messvorrichtung vorzugsweise sich erst im Anschluss an die Ablösevorrichtung befindet. Somit wird insbesondere die Dicke gemessen, nachdem der Kalandrierprozess abgeschlossen ist. In Abhängigkeit der ermittelten Dicke wird insbesondere der Kalander eingestellt. Mittels der Fertigungsvorrichtung können hierbei eine Vielzahl unterschiedlicher Elektroden und/oder Metallfolie erstellt/bearbeitet werden. Zur Anpassung erfolgt lediglich eine Auswahl eines entsprechenden Trägerbands und ein Anpassen des Kalanders. Eine weitere Einstellung oder ein Austausch von einzelnen Bestandteilen ist nicht erforderlich.

Die Erfindung betrifft ferner eine mittels einer entsprechenden Fertigungsvorrichtung oder zumisst gemäß dem Verfahren erstellt Elektrode sowie eine Steuereinheit zur Durchführung des Verfahrens, die also hierfür geeignet, insbesondere vorgesehen und eingerichtet ist. Die Steuereinheit umfasst beispielsweise einen anwendungsspezifischen Schaltkreis (ASIC) oder einen Mikroprozessor, der geeigneterweise programmierbar ausgestaltet ist. Vorzugsweise umfasst die Steuereinheit ein Speicher, auf dem ein Computerprogrammprodukt abgespeichert ist, das bei Ausführung durch den Computer, also insbesondere den Mikroprozessor, diesen veranlasst, das Verfahren durchzuführen. Insbesondere betrifft die Erfindung auch ein entsprechendes Computerprogrammprodukt.

Die im Zusammenhang mit dem Verfahren beschriebenen Vorteile und Weiterbildungen sind sinngemäß auch auf die Fertigungsvorrichtung /die Steuereinheit/die Verwendung/die Elektrode sowie untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren Batterien aufweist,
- Fig. 2: schematisch in einer Schnittdarstellung eine der Batterien, die zwei Elektroden umfasst,
- Fig. 3: ein Verfahren zur Herstellung einer der Elektroden,
- Fig. 4: schematisch in einer Seitenansicht schematisch eine Fertigungsvorrichtung, die einen Kalander aufweist,
- Fig. 5 - 7: jeweils in einer Schnittdarstellung den Kalander in unterschiedlichen Betriebspositionen,
- Fig. 8: gemäß Fig. 5 eine alternative Ausführungsform des Kalanders,
- Fig. 9: gemäß Fig. 5 eine Ziehvorrichtung der Fertigungsvorrichtung,
- Fig. 10: ausschnittsweise eine Abwandlung der Ziehvorrichtung,
- Fig. 11: in einer Schnittdarstellung eine Ausführungsform eines Trägerbands,
- Fig. 12: in einer Draufsicht eine weitere Ausführungsform des Trägerbands,
- Fig. 13: gemäß Fig. 4 eine alternative Ausführungsform der Fertigungsvorrichtung, und
- Fig. 14: in einer Schnittdarstellung eine Weiterbildung der Elektrode während der Herstellung.

Einander entsprechende Teile sind in allen Figuren mit den gleichen Bezugszeichen versehen.

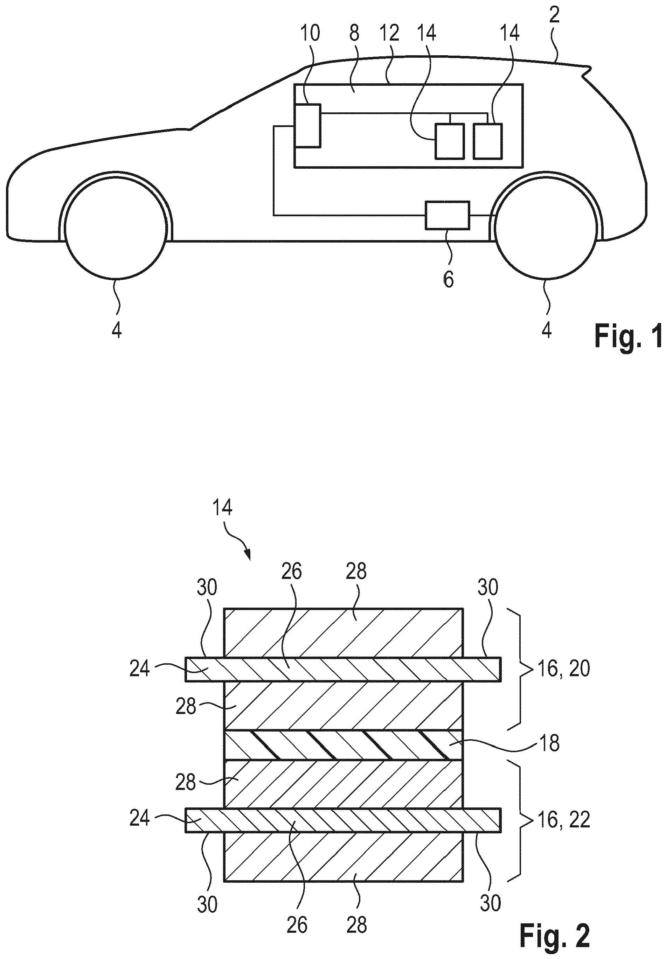

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist ferner einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 sind mehrere Batterien 14 angeordnet, von denen zwei dargestellt sind. Die Batterien 14 sind zu mehreren, nicht dargestellten Modulen zusammengefasst. Die Batterien 14 jedes Moduls sind dabei teilweise elektrisch in Reihe und zueinander parallel geschaltet und in einem gemeinsamen Gehäuse angeordnet. Die Module wiederum sind miteinander elektrisch kontaktiert, wobei ein Teil der Module zueinander elektrisch in Reihe und diese wiederum elektrisch zueinander parallel geschaltet sind. Der elektrische Verband der Module und somit auch der Batterien 14 ist mit der Schnittstelle 10 elektrisch kontaktiert, sodass bei Betrieb des Antriebs 6 ein Entladen der Batterien 14 erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batterien 14 jeweils bereitgestellten elektrischen Spannung.

In Figur 2 ist in einer Schnittdarstellung eine der zueinander baugleichen Batterien 14 dargestellt. Die Batterie weist zwei Elektroden 16 auf, die über einen Separator 18 voneinander getrennt sind. Die beiden Elektroden 16 und der Separator 18 sind übereinandergestapelt und liegen jeweils direkt aneinander an. Eine der Elektroden 16 ist eine Anode 20, und die verbleibenden der Elektroden 16 ist eine Kathode 22.

Die beiden Elektroden 16 sind zueinander gleichartig aufgebaut und weisen jeweils einen Stromableiter (Träger, Ableiter) auf, der aus einer Metallfolie 24 gefertigt ist. Im Fall der Anode 20 ist die Metallfolie 24 eine Kupferfolie und im Fall der Kathode 22 eine Aluminiumfolie. Jede Metallfolie 24 ist eben und weist eine Dicke senkrecht zur jeweiligen Ausdehnungsebene von 8µm auf. Zudem umfasst jede Metallfolie 24 einen Hauptkörper 26, die beide zueinander deckungsgleich sind, und im Wesentlichen die gleiche Ausdehnung wie der Separator 18 aufweisen. Auf jeden Hauptkörper 26 ist beidseitig jeweils eine Schicht 28 aufgetragen, die jeweils ein Aktivmaterial enthält. Das Auftragen erfolgt beispielsweise mittels Gießens oder Druckens. Als Aktivmaterial wird dabei in einer Ausführung NMC verwendet. Jede der Schichten 28 umfasst ferner einen nicht näher dargestellten Binder sowie ein Lösungsmittel und Leitruß. Die Dicke jeder der Schichten 28 ist hierbei im Wesentlichen 60 µm.

Jeder der Metallfolien 24 weist ferner zwei Ränder 30 auf, von denen jeder auf gegenüberliegenden Seiten der jeweilige Schicht 28 übersteht und somit auf gegenüberliegenden Seiten des jedes jeweiligen Hauptkörpers 26 angeordnet sind. Die Ränder 30 reichen von der jeweiligen Längskante der jeweiligen Metallfolie 24 in Richtung des Hauptkörpers 26 und stellen jeweils zwischen 2% und 10%, nämlich in diesem Beispiel 5 %, der Fläche der vollständigen Metallfolie 24 dar. Auf die Ränder 30 ist die jeweilige Schichten 28 nicht aufgetragen. Zusammenfassend weist jede Elektrode 16 die mit den beiden Schichten 28 versehene jeweiligen Metallfolie 24 auf, wobei die beiden Ränder 30 frei von den Schichten 28 sind.

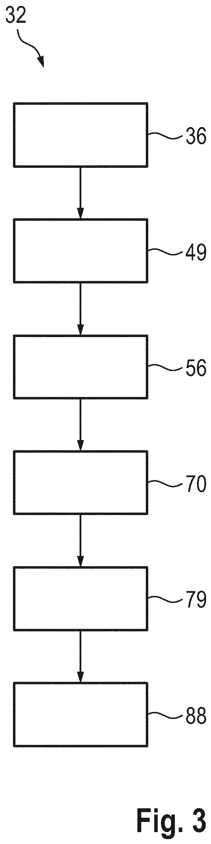

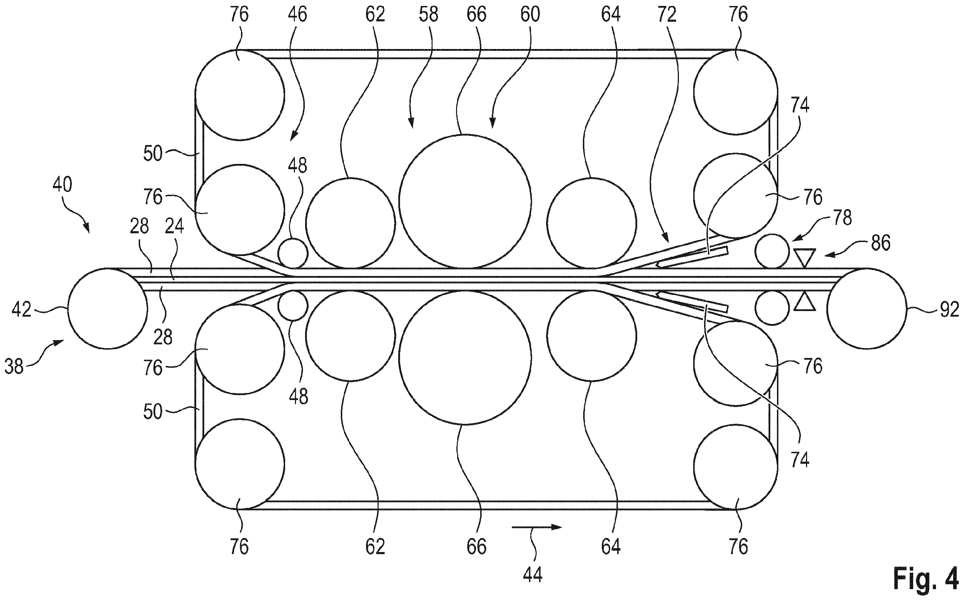

In Figur 3 ist ein Verfahren 32 zur Herstellung der Elektroden 16 dargestellt, wobei je nach Elektrode, 16, also je nachdem, ob sich um die Anode 20 oder die Kathode 22 handelt, unterschiedliche Ausgangsstoffe verwendet werden. Zur Herstellung, als zur Durchführung des Verfahrens 32 wird eine in Figur 4 dargestellte Fertigungsvorrichtung 34 verwendet. Somit ist die Fertigungsvorrichtung 34 gemäß dem Verfahren 32 betrieben. Hierfür weist die Fertigungsvorrichtung 34 eine nicht näher dargestellte Steuereinheit auf, mittels derer die einzelnen Bestandteile der Fertigungsvorrichtung 34 gesteuert und/oder geregelt werden.

In einem ersten Arbeitsschritt 36 wird mittels einer Zuführvorrichtung 38 die Metallfolie 24 zugeführt, die beidseitig mit der jeweiligen Schicht 28 versehen ist, wobei die Ränder 30 frei von der jeweiligen Schicht 28 sind. Hierbei ist die jeweilige Schicht 28 zunächst lediglich aufgetragen, also mittels Gießens oder Druckens auf die Metallfolie 24 aufgebracht bracht und mit dieser stoffschlüssige verbunden und oder verklebt, sodass ein Band 40 erstellt ist. Mit anderen Worten ist das Band 40 aus der Metallfolie 24 sowie den beiden Schichten 28 gebildet. Die Schichten 28 sind hierbei noch nicht verdichtet und weisen eine vergleichsweise hohe Porosität auf, beispielsweise aufgrund des Entfernens eines Lösungsmittels bei einem Trocknungsvorgang der jeweiligen Schicht 28.

Das Band 40 ist auf eine Rolle 42 der Zugführervorrichtung 38 aufgerollt und wird entlang einer Bewegungsrichtung 44 von der Rolle 42 abgerollt, die senkrecht zur Rotationsachse und/oder Anordnungsrichtung der Rolle 42 ist. Die Ränder 30 erstrecken sich hierbei entlang der Bewegungsrichtung 44. Das Band 40 wird zu einer Aufbringvorrichtung 46 geleitet, die auf jeder Seite der Metallfolie 24 jeweils zwei Aufbringwalzen 48 aufweist, von denen jedoch lediglich jeweils gezeigt ist.

Mittels jeder Aufbringwalzen 48 wird in einem zweiten Arbeitsschritt 49 jeweils ein Trägerband 50 auf den Rand 30 aufgebracht wird. Dabei wird mittels jeweils zweien der Aufbringwalze 48 auf einen der Ränder 30 auf gegenüberliegenden Seiten der Metallfolie 24 jeweils zwei der Trägerbänder 50 aufgebracht. Somit sind jedem der Ränder 30 jeweils zwei der Trägerbänder 50 zugeordnet, und zwischen jeweils zweien der Trägerbänder 50 befindet sich die Metallfolie 24.

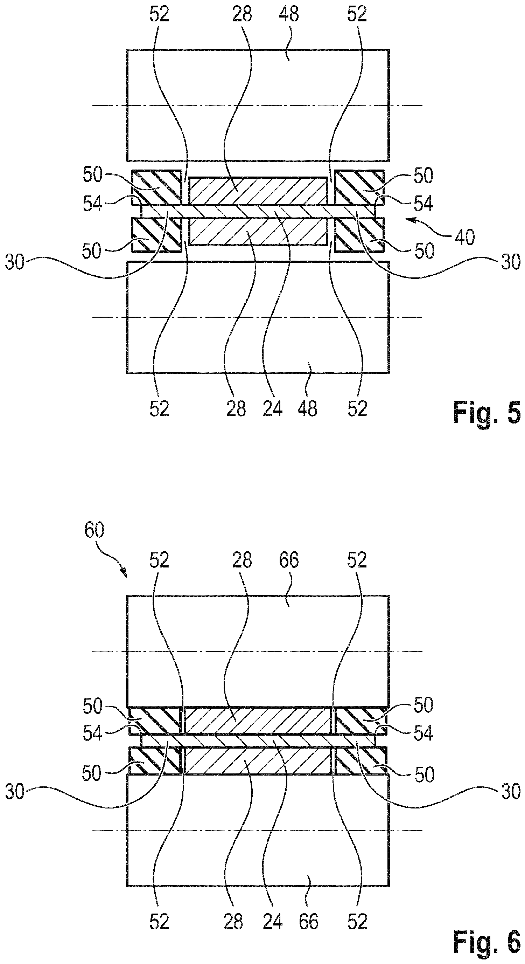

Mittels jeder Aufbringwalzen 48 wird das jeweils aus einem Gummi, nämlich SBR (Styropor-Butadien-Kautschuk), erstellte Trägerband 50 auf die Metallfolie 24 gepresst, sodass dieses dort anhaftet, wie in Figur 5 in einer Schnittdarstellung senkrecht zur Bewegungsrichtung 44 gezeigt. Die Trägerbänder 50 sind dabei jeweils in einem Abstand 52, der 3 mm beträgt, zu der jeweiligen Schicht mittels der Aufbringwalzen 48 aufgebracht, die zur besseren Übersicht beabstandet von dem Band 40 dargestellt sind. Zudem stehen die Trägerbänder 50 über die jeweiligen zugeordneten Kanten 54, also die Längskanten des jeweiligen Rands 30 über, nämlich ebenfalls um 3 mm. Folglich werden die Trägerbänder 50 derart auf den jeweils zugeordneten Rand 30 aufgebracht, dass diese jeweils seitlich über die Metallfolie 24 überstehen. Die Dicke der Trägerbänder 50, also deren Ausdehnung senkrecht zur Metallfolie 24, ist größer als die Dicke der jeweiligen Schicht 28 gewählt, sodass die Trägerbänder 50 über die Schicht 28, die auf der gleichen Seite der Metallfolie 24 aufgebracht sind, jeweils überstehen.

In einem sich anschließenden dritten Arbeitsschritt 56 wird das Band 40, auf das die Trägerbänder 50 aufgebracht sind, durch eine Spannvorrichtung 58 und einen Kalander 60 geführt. Die Spannvorrichtung 58 weist zwei erste Spannwalzen 62 auf, sich in Bewegungsrichtung 44 vor dem Kalander 60 befindenden, und die auf gegenüberliegenden Seiten des Bandes 40 angeordnet sind. Auch weist die Spannvorrichtung 58 zwei zweite Spannwalzen 64 auf, die ebenfalls auf gegenüberliegenden Seiten des Bands 40 angeordnet sind, und die sich in Bewegungsrichtung 44 hinter dem Kalander 60 befinden. Der Kalander 60 umfasst zwei Kalanderwalzen 66, durch die das Band 40 mit den Trägerbänder 50 geführt wird. Hierbei ist es möglich, den Abstand der Kalanderwalzen 66 zu dem Band 40 zu variieren.

Mittels der Spannwalzen 62, 64 wird das Band 40 sowie die Trägerbänder 50 gespannt, sodass dieses zwischen den ersten Spannwalze 62 und den zweiten Spannwalzen 64 nicht durchhängt. Hierbei wird mittels der ersten Spannwalze 62 eine Kraft entgegen der Bewegungsrichtung 44 und mittels der zweiten Spannwalzen 64 eine Kraft in Bewegungsrichtung 44 auf das Band 40 sowie die Trägerbänder 50 ausgeübt, sodass in dem Band 40 und den Trägerbändern 50 keine Falten vorhanden sind.

Mittels der Kalanderwalzen 66 wird eine Kraft auf das Band 40 senkrecht zur Metallfolie 24 auf diese zu gerichtet erzeugt. Dabei werden, wie in Figur 6 in einer Schnittdarstellung senkrecht zur Längsrichtung 44 durch den Kalander 60 und die 2 drehbargelagerten Kalanderwalzen 66 dargestellt, die Schichten 28 komprimiert. Infolgedessen dehnen sich diese jeweils zumindest teilweise in Richtung der jeweils zugeordneten Trägerbänder 50, also senkrecht zur Bewegungsrichtung 44, aus, sodass jeder Abstand 52 verkleinert wird. Aufgrund der Kraftausübung mittels der Kalanderwalzen 66 wird zudem die Metallfolie 24 sowohl in Bewegungsrichtung 44 als auch senkrecht hierzu ausgedehnt, wobei die Krafteinleitung über die Schicht 28 erfolgt. Zudem erfolgt eine Krafteinleitung über die Trägerbänder 50, also auf die Rändern 30 der Metallfolie 24. Da die Dicke der Trägerbänder 50 größer als die jeweilige Schicht 28 ist und diese zudem über die jeweilige Kante 54 überstehen, werden bei Kontakt mit den Kalanderwalzen 66 zunächst die Ränder 30 der Metallfolie 24 und erste anschließend der Hauptkörper 26 verformt, wobei ein Faltenwurf an den Kanten 54 aufgrund des Überstands vermieden wird.

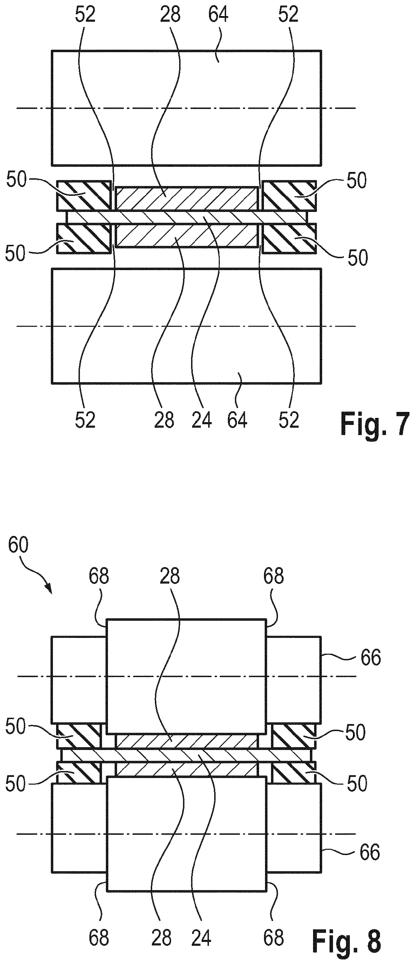

Aufgrund der Elastizität der Trägerbänder 50 dehnen sich diese nach Verlassen des Kalanders 60 und dem Passieren der zweiten Spannwalzen 64 erneut aus, wie in Figur 7 dargestellt, wobei die zweiten Spannwalzen 64 von dem Band 40 beabstandet gezeigt sind. Zum Spannen des Bandes 40 jedoch sind diese, ebenso wie die ersten Spannwalzen 62, in mechanischem Kontakt mit den Trägerbändern 50 sowie den Schichten 28. Die Dichte der Schichten 28 wurde jedoch mittels des Kalanders 60 erhöht, sodass diese eine geringe Dicke aufweisen und zumindest teilweise in den zwischen den Trägerbändern 50 und der Schicht 28 ursprünglich vorhandenen Abstand 52 hineingedrückt wurden.

In Figur 8 ist eine Alternative des Kalanders 60 dargestellt. Dabei weisen die Trägerbänder 50 eine vergleichsweise große Dicke auf, weswegen ein Aufbringen auf die Metallfolie 24 vereinfacht ist. Damit eine Beschädigung der Metallfolie 24 beim Führen durch den Kalander 60 aufgrund der damit aufgebrachten Kraft auf die Metallfolie 24 vermieden ist, weisen die Kalanderwalzen 66 jeweils zwei Stufen 68 auf, sodass diese auf die unterschiedlichen Dicken angepasst sind. Dabei sind die Stufen 68 derart gewählt, dass über die Trägerbänder 50 und die Schichten 28 auf die Metallfolie 24 jeweils die gleiche Kraft aufgebracht wird, sodass die Metallfolie 24 mittels des Kalanders 60 im Wesentlichen gleichmäßig verformt wird. Der einzige Bereich, in dem keine Krafteinwirkung direkt erfolgt, ist, ebenso wie bei der vorherigen Ausführungsform, der Abstand 52, der jedoch vergleichsweise klein gewählt ist.

In einem sich anschließenden vierten Arbeitsschritt 70 werden mittels einer Ablösevorrichtung 72 die Trägerbänder 50 von der Metallfolie 24 abgelöst. Die Ablösevorrichtung 72 weist vier Keile auf, wobei jedem Trägerband 50 jeweils einer der Keile 74 zugeordnet ist, von denen lediglich zwei dargestellt sind. Mittels mehrerer Führungsrollen 76 werden anschließend die Trägerbänder 50 zu der jeweils zugeordneten Aufbringwalze 48, also der Aufbringvorrichtung 46 geführt. Hierbei wird mittels der Führungsrollen 76 sichergestellt, dass das jeweilige Trägerband 50 ausreichend gespannt ist, sodass eine Belastung des Trägerbands 50 und/oder ein Faltenwurf in diesem vermieden wird.

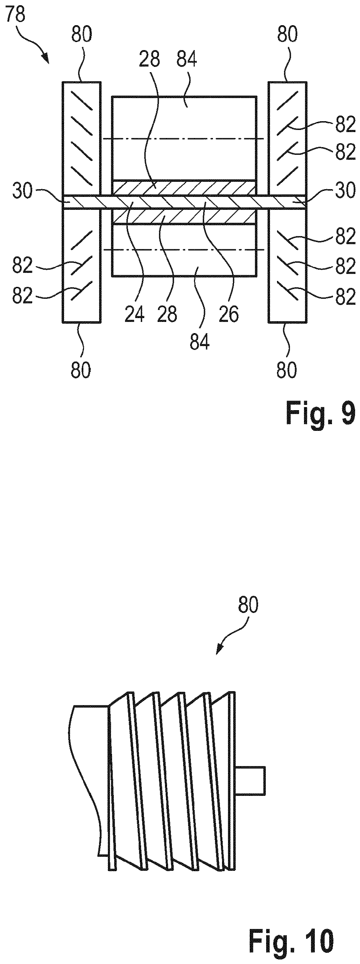

Die mit den Schichten 28, die kalandriert wurden, versehene Metallfolie 24 wird zu einer Ziehvorrichtung 78 in Bewegungsrichtung 44 geführt, die in Figur 9 in einer Draufsicht entlang der Bewegungsrichtung 44 gezeigt ist. Mittels der Ziehvorrichtung 78 wird in einem fünften Arbeitsschritt 79 jeder Rand 30 in der Ausdehnungsebene der Metallfolie 24 von der Schicht 28 und somit dem Hauptkörper 26 der Metallfolie 24 weggezogen. Hierbei ist die mittels der Ziehvorrichtung 78 auf den jeweiligen Rand 30 einwirkende Kraft senkrecht zur Bewegungsrichtung 44. Hierfür weist die Ziehvorrichtung 78 vier Walzen 80 auf, die aus einem Kunststoff erstellt sind, und die jeweils an der Oberfläche mehrere Strukturen 82 aufweisen, nämlich Sicken. Jeweils zwei der Walzen 80 befinden sich auf gegenüberliegenden Seiten der Metallfolie 24, und jedem der Ränder 30 sind jeweils zwei der Walzen 80 zugeordnet. Die Walzen 80 liegen bei Führen des Bandes 40 durch die Ziehvorrichtung 78 an den Rändern 30 kraftschlüssig an, wobei jeder der Ränder 30 zwischen zweien der Walzen 80 hindurchgeführt wird. Die Strukturen 82 sind hierbei derart gewählt, dass aufgrund der Rotationsbewegung der Walzen 80 die Ränder 30 von dem Hauptkörper 26 weggezogen werden. Dieser wird über die Schicht 28 mittels zweier weiterer Walzen 84 der Ziehvorrichtung 78, die sich auf gegenüberliegenden Seiten der Metallfolie 24 befinden, und die aus einem Aluminium erstellt sind, stabilisiert. Hierfür liegen die weiteren Walzen 84 jeweils kraftschlüssige an den Schichten 28 an.

Nachfolgend wird das auf diese Weise bearbeitete Band 40 durch eine Messvorrichtung 86 geführt, mittels derer die Dicke der Schicht 28, also auch die Dicke des Bandes 40 gemessen wird. Anhand der mittels der Messvorrichtung 86 ermittelten Dicke erfolgt eine Einstellung des Kalanders 60. Falls die Dicke im Vergleich zu einem Sollwert zu groß ist, werden die Kalanderwalzen 66 aufeinander zubewegt, sodass nachfolgend die Schicht 28 verstärkt komprimiert werden. Falls hingegen die Dicke zu gering ist, werden die Kalanderwalze 66 zueinander beabstandet.

In einem sechsten Arbeitsschritt wird die mit der komprimierten Schichten 28 versehene Metallfolie 24, also das Band 40, zu einer Abtransportvorrichtung 90 geleitet, die eine weitere Rolle 92 aufweist. Auf die weitere Rolle 92 wird das Band 40 aufgerollt, sodass eine Lagerung ermöglicht ist. In einem nicht näher dargestellten Arbeitsschritt wird von der weiteren Rolle 92 oder mittels einer Schneidvorrichtung vor dem Aufzuwickeln auf die weitere Rolle 92 das Band 40 geeignet aufgeteilt, sodass die Elektroden 16 fertig erstellt sind.

In Figur 10 ist eine Abwandlung einer der Walzen 80 der Ziehvorrichtung 78 dargestellt. Die Walze 80 weist keine Strukturen 82 auf, sondern ist helixartig geformt, wobei bei Eingriffen der Helix in den Rand 30 dieser von der Schicht 26 wegbewegt wird.

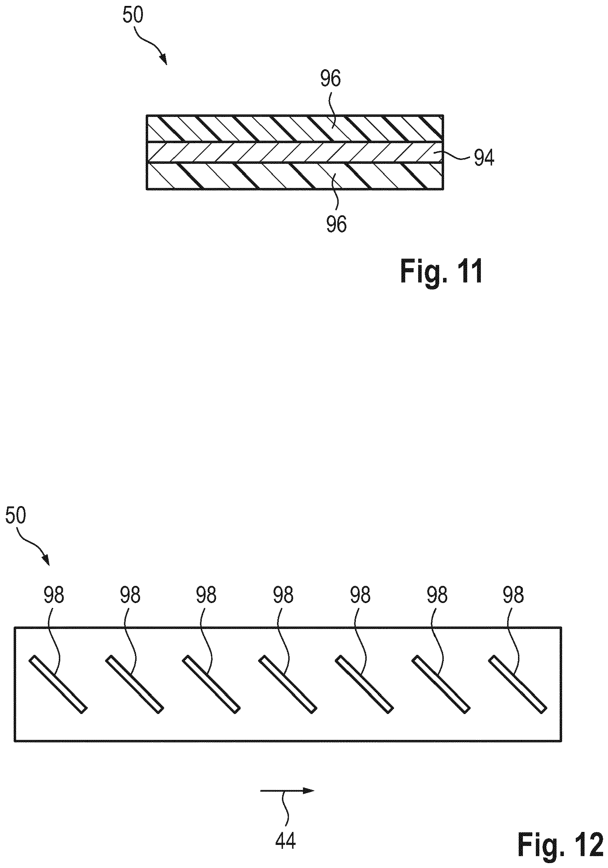

In Figur 11 ist in einer Schnittdarstellung senkrecht zur Bewegungsrichtung 44 eine Alternative der Trägerbänder 50 gezeigt. Dieses weist ein Metallband 94 auf, das aus einem Edelstahl erstellt ist. Das Metallband 94 ist auf beiden Seiten mit einem Kunststoff 96 beschichtet, wobei als Kunststoff 96 Polyurethan verwendet wird. Ein derartiges Trägerband 94 ist vergleichsweise robust, und aufgrund des Kunststoffs 96 ist eine Beschädigung der Metallfolie 24 sowie der Führungsrollen 76 vermieden.

In Figur 12 ist in einer Draufsicht eine weitere Ausführungsform eines der Trägerbänder 50 in einer Draufsicht von Seiten der Metallfolie 24 her gezeigt. Das Trägerband 50 weist auf der der Metallfolie 24 zugewandten Seite schräg zur Bewegungsrichtung 44 verlaufende Strukturen 98 auf, nämlich entsprechende Senken oder Kanten. Mittels der Strukturen 98 erfolgt bei Aufbringen einer Kraft mittels des Kalanders 60 sowie der Spannvorrichtung 58 ein Wegziehen des Randes 30 von der Schicht 28. In diesem Fall ist es möglich, die Ziehvorrichtung 78 wegzulassen. In einer Alternative ist diese zusätzlich vorhanden.

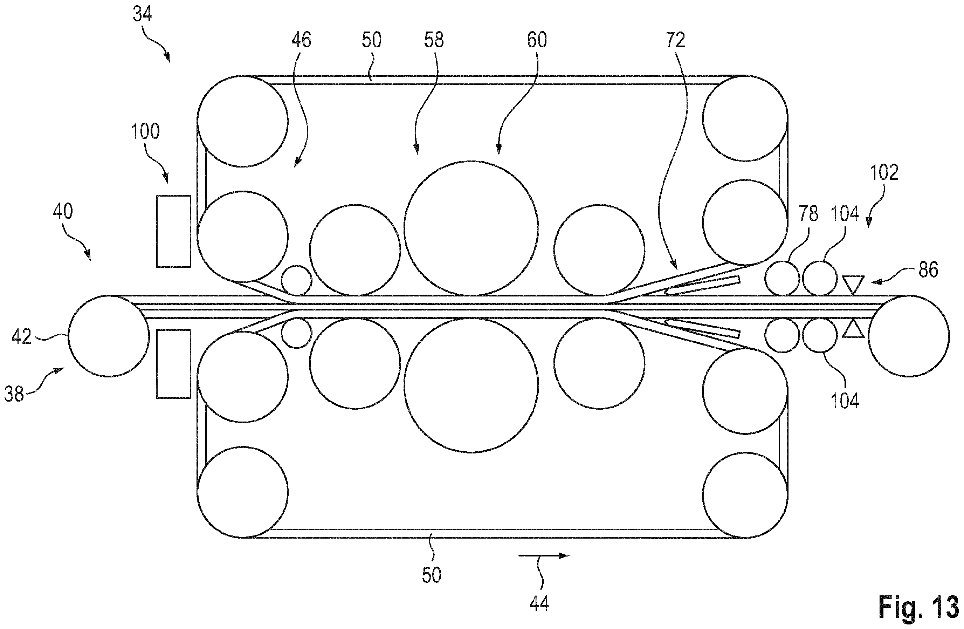

In Figur 13 ist eine Abwandlung der Fertigungsvorrichtung 34 dargestellt. Zusätzlich zu der in Figur 4 dargestellten Variante ist eine Wärmvorrichtung 100 vorhanden, die in Bewegungsrichtung 44 zwischen der Rolle 42, also der Zuführvorrichtung 38, und der Aufbringvorrichtung 46 angeordnet ist. Mittels der Wärmvorrichtung 100 wird die mit der Schichten 28 versehene Metallfolie 24 vor dem Aufbringen des Trägerbands 50 auf ca. 100 °C erwärmt. Hierfür wird mittels der Wärmvorrichtung 100 heiße Luft auf das Band 40 geblasen. Aufgrund der Erwärmung des Bandes 40 ist einerseits ein Anhaften der Trägerbänder 50 verbessert. Andererseits wird die Metallfolie 24 teilweise plastisch verformt, wobei mittels der Spannvorrichtung 58 etwaige entstehende Falten entfernt werden, sodass bei dem Kalandrieren mittels des Kalanders 60 eine benötigte Kraft verringert ist. Auch ist ein Faltenwurf weiter verringert.

Die Fertigungsvorrichtung 34 weist zusätzlich eine Kühlvorrichtung 102 auf, die zwei Kühlwalzen 104 umfasst, die auf gegenüberliegenden Seiten des Bandes 40 angeordnet sind. Hierbei befinden sich die Kühlvorrichtung 102 nach der Ziehvorrichtung 78 in Bewegungsrichtung 44, und die Kühlwalzen 104 liegen mechanisch direkt an dem Band 40 an und kühlen dieses bei Betrieb auf ca. 30 °C. Folglich weist das Band 40 nach Passieren der Kühlvorrichtung 102 eine konstante Temperatur. Infolgedessen wird mittels der Messvorrichtung 86 die Dicke des Bandes 40 bei jeweils der gleichen, und zwar einer konstanten, Temperatur gemessen.

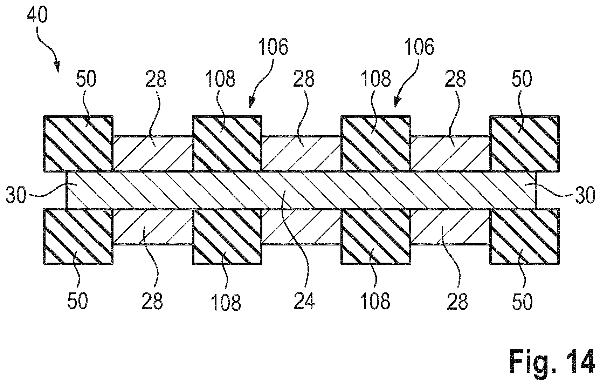

In Figur 14 ist eine weitere Abwandlung des Bandes 40, und somit die Elektrode 16 während deren Fertigung, in einer Schnittdarstellung senkrecht zur Bewegungsrichtung 44 gezeigt. Zusätzlich zu den Rändern 30 ist die Metallfolie 24 beidseitig auch in zwei Mittelbereichen 106 frei von der Schicht 28. Die Mittelbereiche 106 erstrecken sich parallel zu den Kanten 54 entlang der vollständigen Ausdehnung des Bandes 40 in Bewegungsrichtung 44 und sind mittels eines Teils der Schicht 28 zueinander beabstandet. Mittels der Aufbringvorrichtung 46 wird auf die Mittelbereiche 106 der Metallfolie 24 pro Seite jeweils zwei weitere Trägerbänder 108 aufgebracht, die baugleich zu den Trägerbändern 50 sind. Somit sind insgesamt vier weitere Trägerbänder 108 vorhanden.

Somit wird mittels des Kalanders 60 auch in den Mittelbereichen 106 auf die Metallfolie 24 eine Kraft ausgeübt, weswegen die Metallfolie 24 mittels des Kalanders 60 im Wesentlichen gleich belastet wird. Mittels der Ablösevorrichtung 72 werden die weiteren Trägerbänder 108 nach dem Kalandrieren ebenfalls abgelöst, und diese werden nachfolgend ebenfalls erneut zu der Aufbringvorrichtung 46 geleitet. In einer nicht näher dargestellten Variante ist zwischen den weiteren Trägerbänder 108 und den Schichten 28 jeweils zusätzlich der Abstand 52 oder ein anderer Abstand vorhanden. Hierfür ist eine Breite der weiteren Trägerbänder 108 entsprechend gewählt. In einer Ausführungsform wird mittels der Abtransportvorrichtung 90 die Metallfolie 24 in den Mittelbereichen 106 aufgetrennt, sodass bei Ablängen des Bands 40 senkrecht zur Bewegungsrichtung insgesamt drei Elektroden 16 gelichzeitig hergestellt werden.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Antrieb
- 8: Energiespeicher
- 10: Schnittstelle
- 12: Gehäuse
- 14: Batterie
- 16: Elektrode
- 18: Separator
- 20: Anode
- 22: Kathode
- 24: Metallfolie
- 26: Hauptkörper
- 28: Schicht
- 30: Rand
- 32: Verfahren
- 34: Fertigungsvorrichtung
- 36: erster Arbeitsschritt
- 38: Zuführvorrichtung
- 40: Band
- 42: Rolle
- 44: Bewegungsrichtung
- 46: Aufbringvorrichtung
- 48: Aufbringwalze
- 49: zweiter Arbeitsschritt
- 50: Trägerband
- 52: Abstand
- 54: Kante
- 56: dritter Arbeitsschritt
- 58: Spannvorrichtung
- 60: Kalander
- 62: erste Spannwalze
- 64: zweite Spannwalze
- 66: Kalanderwalze
- 68: Stufe
- 70: vierter Arbeitsschritt
- 72: Ablösevorrichtung
- 74: Keil
- 76: Führungsrolle
- 78: Ziehvorrichtung
- 79: fünfter Arbeitsschritt
- 80: Walze
- 82: Struktur
- 84: weitere Walze
- 86: Messvorrichtung
- 88: sechster Arbeitsschritt
- 90: Abtransportvorrichtung
- 92: weiterer Rolle
- 94: Metallband
- 96: Kunststoff
- 98: Struktur
- 100: Wärmvorrichtung
- 102: Kühlvorrichtung
- 104: Kühlwalze
- 106: Mittelbereich

## Patentansprüche

1. Verfahren (32) zur Herstellung einer Elektrode (16) einer Batterie (14), bei welchem
- eine Metallfolie (24) zugeführt wird, die mit einer ein Aktivmaterial aufweisenden Schicht (28) versehen ist, wobei ein Rand (30) der Metallfolie (24) frei von der Schicht (28) ist,
- auf den Rand (30) ein Trägerband (50) aufgebracht wird,
- die Metallfolie (24) mit der Schicht (28) und dem Trägerband (50) kalandriert wird, und
- das Trägerband (50) von der Metallfolie (24) abgelöst wird.

2. Verfahren (32) nach Anspruch 1, **dadurch gekennzeichnet, dass** das Trägerband (50) in einem Abstand (52) zu der Schicht (28) auf den Rand (30) aufgebracht wird.

3. Verfahren (32) nach Anspruch 1 oder 2, **dadurch gekennzeichnet, dass** das Trägerband (50) derart auf den Rand (30) aufgebracht wird, dass dieses seitlich über die Metallfolie (24) übersteht.

4. Verfahren (32) nach einem der Ansprüche 1 bis 3, **dadurch gekennzeichnet, dass** die Dicke des Trägerbands (50) größer als die Dicke der Schicht (28) gewählt wird.

5. Verfahren (32) nach einem der Ansprüche 1 bis 4, **dadurch gekennzeichnet, dass** ein aus einem Gummi erstelltes Trägerband (50) herangezogen wird.

6. Verfahren (32) nach einem der Ansprüche 1 bis 4, **dadurch gekennzeichnet, dass** ein Trägerband (50) herangezogen wird, das ein mit einem Kunststoff (96) beschichtetes Metallband (94) aufweist.

7. Verfahren (32) nach einem der Ansprüche 1 bis 6, **dadurch gekennzeichnet, dass** ein Trägerband (50) herangezogen wird, das auf der der Metallfolie (24) zugewandten Seite schräg verlaufende Strukturen (98) aufweist.

8. Verfahren (32) nach einem der Ansprüche 1 bis 7, **dadurch gekennzeichnet, dass** der Rand (30) in der Ausdehnungsebene der Metallfolie (24) von der Schicht (28) weggezogen wird.

9. Verfahren (32) nach einem der Ansprüche 1 bis 8, **dadurch gekennzeichnet, dass** auf einen Mittelbereich (106) der Metallfolie (24), der frei von der Schicht (28) ist, ein weiteres Trägerband (108) aufgebracht wird, das nach dem Kalandrieren abgelöst wird.

10. Verfahren (32) nach einem der Ansprüche 1 bis 9, **dadurch gekennzeichnet, dass** die mit der Schicht (28) versehene Metallfolie (24) vor dem Aufbringen des Trägerbands (50) erwärmt wird.

11. Fertigungsvorrichtung (34), die eine Zuführvorrichtung (38) für eine mit einer Schicht (28) versehenen Metallfolie (24), eine Aufbringvorrichtung (46) für ein Trägerband (50), einen Kalander (60) und eine Ablösevorrichtung (72) für das Trägerband (50) aufweist, und die gemäß einem Verfahren (32) nach einem der Ansprüche 1 bis 10 betrieben ist.
